# EUROPEAN PATENT SPECIFICATION

(11) **EP 0 429 519 B1**
(45) Date of publication and mention of the grant of the patent: **02.08.1995**
(21) Application number: 89909589.7
(22) Date of filing: 16.08.1989
(51) Int. Cl.: A01K 61/00

(54) **FLOATABLE FRAME**
SCHWIMMENDE STRUKTUR
STRUCTURE FLOTTANTE

(30) Priority: 17.08.1988 GB 8819564
(43) Date of publication of application: 05.06.1991
(73) Proprietor: DUNLOP LIMITED, London SW1P 2PL (GB)
(72) Inventor: WILLIAMS, John, Stuart, Grimsby DN32 0BT (GB)
(74) Representative: Badger, John Raymond
(86) International application number: GB8900953
(87) International publication number: WO9001872

(56) References cited:
- WO-A-85/03411
- GB-A- 2 184 631
- US-A- 4 610 219
- US-A- 4 651 301

## Description

This invention relates to a floatable frame for use in fish farming apparatus and in particular, although not exclusively, to a floatable frame for use offshore to support a net which defines a river or seawater enclosure for containing fish.

A substantially circular type of floatable frame is already known for use in fish farming apparatus and may be formed by one or more lengths of buoyant hose the ends of which are interconnected.

When a frame of this type is taken in tow or experiences a strong tidal current there is a particular risk that a hose will deform to such an extent that it becomes damaged. Most commonly damage arises at end regions of the hose at the interconnection with end fittings, the hose being inherently less flexible at these regions. As well as resulting in damage such deformation may also unacceptably reduce the area contained by the floatable frame.

Another type of floatable frame for use in fish farming is disclosed in WO 85/03411 and comprises elongate hollow bodies interconnected in pairs and parallel to each other one beside the other to form floating units from which a net-work container is suspended. The ends of the hollow bodies are interconnected by universal joints to form a closed polygonal configuration around the net-work container.

The present invention seeks to provide an improved floatable frame for use in fish farming apparatus in which the aforedescribed disadvantage is mitigated or overcome.

In accordance with one of its aspects the present invention provides a floatable frame for use in fish farming apparatus comprising at least in part a pair of elongate members arranged to extend in a substantially side-by-side manner and substantially rigid end connection means rigidly to secure an end part of the pair of elongate members to another part of the floatable frame, at least one of the elongate members being a reinforced hose, each elongate member being flexible, at least a first of said elongate members being resistant to longitudinal compression, at least a second of said elongate members being resistant to longitudinal tension, member coupling means interconnecting said elongate members whereby application of a sideways force tending to change the curvature of said first of said elongate members results in said first of said elongate members being subject to longitudinal compression and acting via said member coupling means to subject said second of said elongate members to longitudinal tension, and at least one of said elongate members being adapted for floation.

Preferably said substantially rigid end connection means serves at least in part as said member coupling means interconnecting said elongate members whereby forces are transmitted from one elongate member to the other when the frame or part thereof is subject to a sideways force, one member being subject to longitudinal compression and the other to tension.

Additionally or alternatively the elongate members may be interconnected between end regions as considered in the direction of the length of the members. That interconnection may be one which merely serves to maintain the two elongate members in a prescribed side-by-side relationship (and e g transmit transverse forces) or it may be one which additionally acts as member coupling means to transmit longitudinal forces between the elongate members. If the elongate members are not interconnected at end regions in the manner described in the preceding paragraph, they should be interconnected between their end regions by a member coupling means of a kind which acts to transmit longitudinal forces between the members.

It is preferred that each of said first and second elongate members is resistant to both longitudinal tension and compression whereby the frame or part thereof defined by said two elongate members is resistant to change of its radius of curvature under the action of transverse forces in each of two opposite directions.

Each of the elongate members may be in the form of a flexible reinforced hose. The or each hose may be adapted for flotation by virtue of the bore of the hose being sealed against ingress of water so as to contain buoyancy material, air or other gas, by flotation collars and/or by buoyancy material built into the wall structure of the hose. Reinforcement material contained within the wall of the hose may be utilised to provide an ability to withstand longitudinally applied tension and/or compression as well as resisting collapse of the usual circular cross-sectional shape of the hose. The hose should, however, be sufficiently flexible for it to conform substantially with anticipated wave movements in the intended operating environment without damaging forces arising. The bore of the hose may be pressurised or unpressurised.

Although a flexible reinforced hose is particularly suitable for use as an elongate member which resists longitudinal compression, the tension resisting elongate member in particular may alternatively be of a more simple construction not necessarily adapted to resist compression; it may for example be in the form of a steel cable which optionally may be provided with buoyancy means such as floats at intervals along its length or may be supported as necessary by the buoyancy of the adjacent elongate member of the pair.

In a preferred embodiment of the invention a floatable frame or part thereof is defined by a side-by-side arrangement of two elongate members, such as flexible reinforced hoses, of unequal lengths with the respective ends of the hoses being rigidly interconnected by rigid end connection means shaped to accommodate any difference in spacing between confronting ends of the hose(s) (or elongate member(s)) lying at an outward side of the frame and the spacing of the confronting ends of the hose(s) lying at an inward side of the frame. The difference in lengths of the hoses of a pair and the difference in the spacing of confronting pairs of ends may be employed to vary the curvature of an interconnected pair of hoses and therefore alter the shape and size of the frame.

Preferably a hose of a floatable frame has a torsional stiffness of at least 100,000 Newton metres/radian/metre length (0.58 foot tons per degree per foot length). Where the floatable frame comprises two elongate members each comprised by a hose preferably the assembly of the two hoses has a torsional stiffness of at least 125,000 Newton metres/radian/metre length (0.72 foot tons per degree per foot length).

The two elongate members of a pair may be maintained in contact with one another along their lengths or may be maintained spaced from each other by spacing means such as member coupling means. If maintained spaced, the spacing may be uniform or may vary along the length of the elongate members. Thus, a frame or part thereof may be defined by a side-by-side arrangement of two elongate members of different curvatures. One or each of the elongate members may be rectilinear (i e of infinite radius of curvature) in the absence of externally applied forces.

The elongate members or rigid end connection means or member coupling means may be provided with support means for supporting a net or like underwater fish enclosure and any other necessary equipment such as for example means for draining seawater from an internal passage of an elongate member and/or maintaining a positive gas pressure within any such passage.

Embodiments of the invention will now be described, by way of example only, with reference to the accompanying diagrammatic drawings in which:-
- Figure 1: is a plan view of a floatable frame in accordance with a first embodiment of the present invention;
- Figure 2: is a plan view of a floatable frame in accordance with a second embodiment of the present invention;
- Figure 3: shows a hose end connecting means;
- Figure 4: shows an intermediate connecting means, and
- Figures 5 and 6: are plan views of flotable frames in accordance with further embodiments of the present invention.

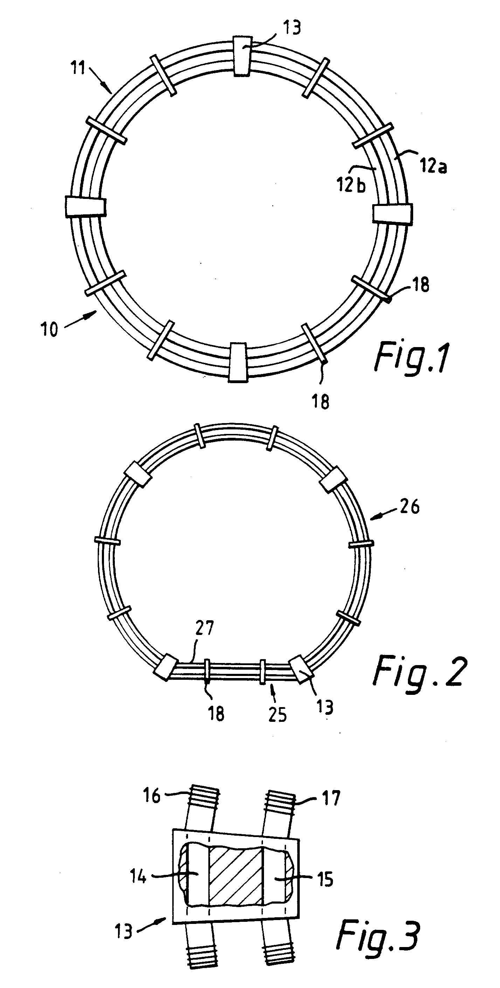

The floatable frame 10 shown in Figure 1 comprises four identical pairs 11 of identical flexible reinforced hoses 12a,12b of 300 mm outer diameter arranged to define a circular frame for supporting a net (not shown) which defines a fish enclosure for a fish farming apparatus.

The two hoses of each pair are rigidly interconnected with one another at their respective ends by rigid end connector blocks 13 which serve also rigidly to interconnect the confronting ends of successive pairs of hoses. The blocks 13 have passages 14,15 to interconnect the bores of the outer hoses 12a, and the bores of the inner hoses 12b.

As seen in Figure 3, the support nipples 16 for the outer hoses 12a allows a greater spacing of the hose ends than that provided by the inner nipples 17. This difference of spacing can be selected such that despite their different radii of curvature the outer and inner hoses 12a,12b may be of equal length, thereby facilitating standardisation of components.

The hoses 12a,12b are of a kind known per se and may be inherently buoyant by virtue of the combination of materials selected for construction of the hose wall. Additional buoyancy is provided by air contained in the hose bores which are sealed against ingress of water. Each hose 12a,12b has a torsional stiffness of 127,000 Newton metres/radian/metre length of hose.

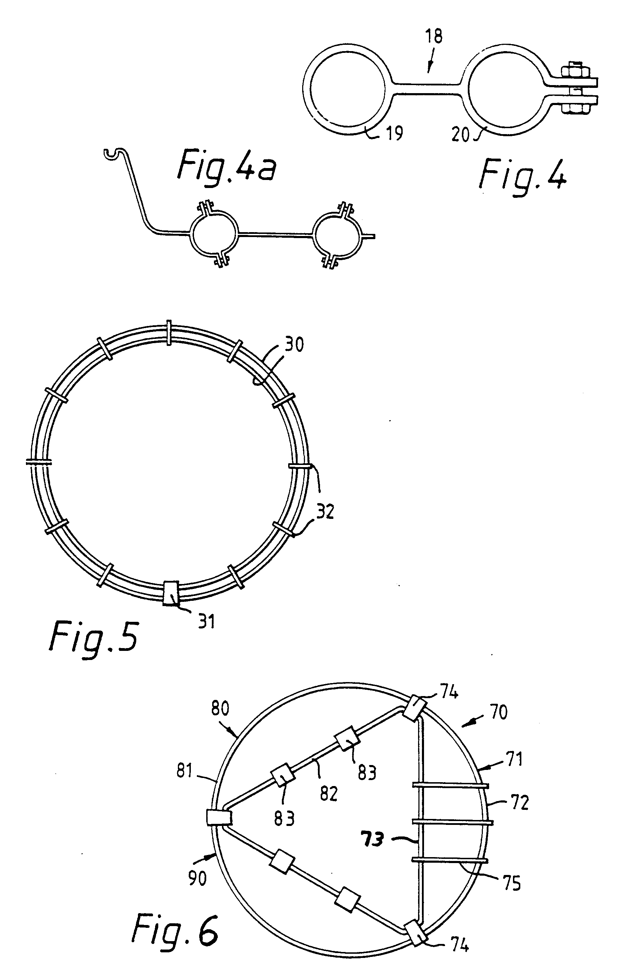

Each pair 11 of hoses is provided at 2 metre intervals with intermediate coupling means in the form of spacers 18 (only two shown) which maintain a predetermined small spacing of approximately 150 mm between the two hoses. An example of a suitable spacer is shown in Figure 4, the spacer having a fixed ring portion 19 which is a free fit around one hose and an adjustable ring portion 20 which may be adjusted to clamp to one of the hoses of a pair when the spacer has been moved to its required final position along the length of the hose. The spacers are fitted before the two ends of each hose are secured to connector blocks 13. An alternative spacer is shown in Figure 4a. The assembly of the pair of hoses has a torisional stiffness of 162,000 Newton metres/radian/metre length of hose.

In the aforedescribed construction the rigid end connector blocks serve to transmit forces between the hoses of each pair. By virtue of each hose having an inherent resistance to compression and tension the connector blocks therefore cc-operate with the pairs of hoses to result in the latter being well adapted to resist change of radius of curvature in the plane of Figure 1 as a result of sideways forces experienced by the hoses when being towed or when subject to tidal currents. In this situation the intermediate spacers serve to resist a tendency for one of the hoses to buckle under the effect of compression.

By virtue of the rigid end connectors providing rigid interconnection of the respective ends of successive pairs of hoses any forces tending to deflect one pair of hoses vertically or horizontally or to twist a pair of hoses are transmitted to and additionally resisted by the neighbouring pair of hoses.

In a modified form of the Figure 1 construction, shown in Figure 2, one portion 25 of the floatable frame 26 is formed by a pair 27 of hoses arranged to extend rectilinearly in the absence of applied sideways forces. This pair of hoses is associated with end connector blocks 13 and intermediate spacers 18 in the same manner as the aforedescribed curved hose pairs 11 and therefore is adapted to resist deformation from a rectilinear form under the action of sideways forces. The rectilinear hose pair 27 is particularly suitable for use in gaining access to the floatable frame and may have secured thereto a deck structure and mooring pillars.

The floatable frame of the invention may be comprised by a single pair of hose lengths 30 interconnected by a single rigid end connector 31 as shown in Figure 5. The two hoses are maintained slightly spaced by eleven intermediate connectors 32 of a kind which each clamp to the two hoses of the pair. The intermediate connectors therefore assist significantly, in conjunction with the end connector 31, in enabling the hoses to resist sideways deformation.

Figure 6 shows a floatable frame 70 which incorporates several further alternative features.

A first portion 71 of the frame comprises a pair of hoses 72,73 one of which is curved and the other straight in the absence of sideways forces. The hoses are interconnected by end connector blocks 74 which correspond generally with the above-referred blocks 13 and are provided with three intermediate spacers 75. The intermediate spacers are of a kind which correspond with the above-referred spacers 18 with the exception that the two ring portions of the central spacer are more widely spaced than the ring portions of the other two spacers in order to accommodate the variation in spacing between the two hoses along their lengths.

A second portion 80 of the frame comprises a pair of elongate members 81,82 one of which is in the form of the above-described hose 12a and the other is a tension resisting cable 82. The cable is provided with a pair of floats 83 and the cable and hose are interconnected at their ends.

The second portion 81 is of a lower cost than the portion 71 but is useful only to resist sideways forces acting in a direction which tends to move the hose inwards between its ends. Furthermore it is not well adapted to, resist movement of the end connctors towards one another. It is, however, suitable as one portion of a frame adjacent a location, such as an end connector, to which a towing line or swinging mooring line is secured.

The third portion 90 of the frame may correspond with the portion 71 or the portion 80.

In the above-described embodiments only a small number of spacers 18,32,61,75 have been shown. Typically in a construction such as that of Figure 1 each hose 12,12b will have a length of 12 metres and thus the pair 11 of hoses would have 5 spacers at the above-mentioned spacing of 2 metres.

## Claims

1. A floatable frame for use in fish farming apparatus comprising at least in part a pair (11) of elongate members (12a,12b) arranged to extend in a substantially side-by-side manner characterised in that substantially rigid end connection means (13) rigidly to secure an end part of the pair of elongate members to another part of the floatable frame, at least one of the elongate members being a reinforced hose, each elongate member being flexible, at least a first (12a) of said elongate members being resistant to longitudinal compression, at least a second (12b) of said elongate members being resistant to longitudinal tension, member coupling means (18) interconnecting said elongate members whereby application of a sideways force tending to change the curvature of said first of said elongate members results in said first (12a) of said elongate members being subject to longitudinal compression and acting via said member coupling means to subject said second (12b) of said elongate members to longitudinal tension, and at least one of said elongate members (12a,12b) being adapted for flotation.

2. A floatable frame according to claim 1 characterised in that said substantially rigid end connection means (13) serves at least in part as said member coupling means interconnecting said elongate members.

3. A floatable frame according to claim 1 or claim 2 characterised in that the elongate members are interconnected by member coupling means (18) at one or more intermediate positions between their end regions.

4. A floatable frame according to claim 3 characterised in that the interconnection of the elongate members serves to maintain the two elongate members (12a,12b) in a prescribed side-by-side relationship.

5. A floatable frame according to any one of the preceding claims characterised in that the interconnection of the elongate members (13) serves to transmit longitudinal forces between the elongate members.

6. A floatable frame according to any of the preceding claims characterised in that each elongate member (12a,12b) of said pair is resistant to both longitudinal tension and compression.

7. A floatable frame according to any one of the preceding claims characterised in that at least one of the elongate members (12a,12b) is inherently buoyant.

8. A floatable frame according to any one of the preceding claims characterised in that at least one of the elongate members (82) has flotation means (83) secured thereto.

9. A floatable frame according to any one of the preceding claims characterised in that each of the two elongate members (12a,12b) is a flexible reinforced hose.

10. A floatable frame according to any one of the preceding claims characterised in that the bore of the or each hose (12a,12b) is sealed against ingress of water.

11. A floatable frame according to any one of the preceding claims characterised in that buoyancy material is provided in the wall structure or bore of the hose (12a,12b).

12. A floatable frame according to any one of the preceding claims characterised in that said hose has a torsional stiffness of at least 100,000 Newton metres/radian/metre length.

13. A floatable frame according to any one of the preceding claims characterised in that the pair (11) of elongate members comprises a pair of hoses the assembly of which has a torsional stiffness of at least 125,000 Newton metres/radian/metre length.

14. A floatable frame according to any one of the preceding claims characterised in that said two elongate members (72,73) are of unequal length.

15. A floatable frame according to any one of the preceding claims characterised in that two pairs (11) of elongate members are provided and confronting ends of the respective elongate members are interconnected by said rigid end connection means (13) which is shaped to accommodate a difference in spacing between the pairs of confronting ends and to serve as coupling means to interconnect the elongate members.

16. A floatable frame according to any one of the preceding claims characterised in that spacing means (18,32,75) is provided to maintain a spacing between the elongate members.

17. A floatable frame according to any one of the preceding claims characterised in that at least one elongate member (12a,12b,30,60,73,82) is rectilinear when in an unstressed condition.

18. A floatable frame according to any one of the preceding claims characterised in that one (12a) elongate member of a pair is in tension and the other (12b) is in compression in the absence of externally applied forces.

19. A floatable frame according to claim 18 characterised in that at least one of said elongate members (12a,12b) is caused to adopt a non-rectilinear shape in the absence of externally applied forces.

20. A floatable frame according to any one of the preceding claims characterised in that the bore of the hose is unpressurised.

21. Fish farming apparatus characterised in that it comprises the combination of a floatable frame according to any one of the preceding claims, support means associated with the frame and a fish enclosure supported by said support means.

## Patentansprüche

1. Schwimmfähiger Rahmen zur Verwendung bei einer Fischzuchteinrichtung, umfassend mindestens teilweise ein Paar (11) länglicher Elemente (12a, 12b), die in Hinblick auf eine Erstreckung in einer im wesentlichen nebeneinanderliegenden Weise angeordnet sind, **dadurch gekennzeichnet**, daß im wesentlichen starre Endverbindungsmittel (13) zur starren Befestigung eines Endteils des Paars länglicher Elemente an dem anderen Teil des schwimmfähigen Rahmens vorgesehen sind, wobei mindestens eines der länglichen Elemente ein verstärkter Schlauch ist, jedes längliche Element flexibel ist, mindestens ein erstes Element (12a) der länglichen Elemente einer längsgerichteten Zusammendrückung einen Widerstand entgegensetzt, mindestens ein zweites Element (12b) der länglichen Elemente einem längsgerichteten Zug einen Widerstand entgegensetzt, Elementanschlußmittel (18) vorgesehen sind, die die länglichen Elemente miteinander verbinden, wodurch die Aufbringung einer seitwärts gerichteten Kraft, die dazu neigt, die Krümmung des ersten Elements der länglichen Elemente zu verändern, dazu führt, daß das erste Element (12a) der länglichen Elemente einer längsgerichteten Zusammendrükkung ausgesetzt wird, und die über das Elementanschlußmittel in Hinblick darauf wirkt, das zweite Element (12b) der länglichen Elemente einem längsgerichteten Zug auszusetzen, und wobei mindestens eines der länglichen Elemente (12a, 12b) zum Schwimmen geeignet ist.

2. Schwimmfähiger Rahmen nach Anspruch 1, **dadurch gekennzeichnet**, daß das im wesentlichen starre Endverbindungsmittel (13) mindestens teilweise als das Elementanschlußmittel dient, das die länglichen Elemente miteinander verbindet.

3. Schwimmfähiger Rahmen nach Anspruch 1 oder Anspruch 2, **dadurch gekennzeichnet**, daß die länglichen Elemente über Elementanschlußmittel (18) an einer oder mehreren Zwischenpositionen zwischen ihren Endbereichen miteinander verbunden sind.

4. Schwimmfähiger Rahmen nach Anspruch 3, **dadurch gekennzeichnet**, daß die gegenseitige Verbindung der länglichen Elemente dazu dient, die beiden länglichen Elemente (12a, 12b) in einer vorgeschriebenen, nebeneinanderliegenden Beziehung zu halten.

5. Schwimmfähiger Rahmen nach irgendeinem der vorhergehenden Ansprüche, **dadurch gekennzeichnet**, daß die gegenseitige Verbindung (13) der länglichen Elemente dazu dient, längsgerichtete Kräfte zwischen den länglichen Elementen zu übertragen.

6. Schwimmfähiger Rahmen nach irgendeinem der vorhergehenden Ansprüche, **dadurch gekennzeichnet**, daß jedes längliche Element (12a, 12b) des Paars sowohl einem längsgerichteten Zug als auch einer Zusammendrückung einen Widerstand entgegensetzt.

7. Schwimmfähiger Rahmen nach irgendeinem der vorhergehenden Ansprüche, **dadurch gekennzeichnet**, daß mindestens ein Element der länglichen Elemente (12a, 12b) aus sich heraus schwimmfähig ist.

8. Schwimmfähige Rahmen nach irgendeinem der vorhergehenden Ansprüche, **dadurch gekennzeichnet**, daß mindestens ein Element der länglichen Elemente (82) ein daran befestigtes Schwimmittel (83) aufweist.

9. Schwimmfähige Rahmen nach irgendeinem der vorhergehenden Ansprüche, **dadurch gekennzeichnet**, daß jedes der beiden länglichen Elemente (12a, 12b) ein flexibler, verstärkter Schlauch ist.

10. Schwimmfähiger Rahmen nach irgendeinem der vorhergehenden Ansprüche, **dadurch gekennzeichnet**, daß der Hohlraum des oder jedes Schlauchs (12a, 12b) gegen den Eintritt von Wasser abgedichtet ist.

11. Schwimmfähiger Rahmen nach irgendeinem der vorhergehenden Ansprüche, **dadurch gekennzeichnet**, daß Auftriebsmaterial in der Wandstruktur oder dem Hohlraum des Schlauchs (12a, 12b) vorgesehen ist.

12. Schwimmfähiger Rahmen nach irgendeinem der vorhergehenden Ansprüche, **dadurch gekennzeichnet**, daß der Schlauch eine Torsionssteifigkeit von mindestens 100.000 Newton Meter/Grad/Meter Länge aufweist.

13. Schwimmfähiger Rahmen nach irgendeinem der vorhergehenden Ansprüche, **dadurch gekennzeichnet**, daß das Paar (11) länglicher Elemente aus einem Paar Schläuchen besteht, deren Anordnung eine Torsionssteifigkeit von mindestens 125.000 Newton Meter/Grad/Meter Länge aufweist.

14. Schwimmfähiger Rahmen nach irgendeinem der vorhergehenden Ansprüche, **dadurch gekennzeichnet**, daß die beiden länglichen Elemente (72, 73) ungleiche Längen aufweisen.

15. Schwimmfähiger Rahmen nach irgendeinem der vorhergehenden Ansprüche, **dadurch gekennzeichnet**, daß zwei Paare (11) länglicher Elemente vorgesehen sind und die einander gegenüberliegenden Enden der jeweiligen länglichen Elemente mittels der starren Endverbindungsmittel (13) miteinander verbunden sind, die in Hinblick darauf gestaltet sind, eine Abstandsunterschiedlichkeit zwischen den Paaren einander gegenüberliegender Enden aufzunehmen und als Anschlußmittel zur gegenseitigen Verbindung der länglichen Elemente zu dienen.

16. Schwimmfähiger Rahmen nach irgendeinem der vorhergehenden Ansprüche, **dadurch gekennzeichnet**, daß ein Abstandshaltermittel (18, 32, 75) vorgesehen ist, um einen Abstand zwischen den länglichen Elementen aufrechtzuerhalten.

17. Schwimmfähiger Rahmen nach irgendeinem der vorhergehenden Ansprüche, **dadurch gekennzeichnet**, daß mindestens ein längliches Element (12a, 12b, 30, 60, 73, 82) in unbelastetem Zustand geradlinig ist.

18. Schwimmfähiger Rahmen nach irgendeinem der vorhergehenden Ansprüche, **dadurch gekennzeichnet**, daß beim Fehlen von außen aufgebrachter Kräfte ein längliches Element (12a) eines Paares unter Zug steht und das andere Element (12b) zusammengedrückt ist.

19. Schwimmfähiger Rahmen nach irgendeinem der vorhergehenden Ansprüche, **dadurch gekennzeichnet**, daß mindestens ein Element der länglichen Elemente (12a, 12b) zur Annahme einer nicht-geradlinigen Gestalt beim Fehlen von außen aufgebrachter Kräfte veranlaßt ist.

20. Schwimmfähiger Rahmen nach irgendeinem der vorhergehenden Ansprüche, **dadurch gekennzeichnet**, daß der Hohlraum des Schlauchs nicht unter Druck steht.

21. Fischzuchteinrichtung, **dadurch gekennzeichnet**, daß sie die Kombination eines schwimmfähigen Rahmens nach irgendeinem der vorhergehenden Ansprüche, Tragmittel, die mit dem Rahmen in Verbindung stehen, und eine von den Tragmitteln getragene Fischeinfriedung aufweist.

## Revendications

1. Armature flottante destinée à être utilisée dans une installation de pisciculture, comprenant, au moins en partie, une paire (11) d'éléments allongés (12a, 12b) disposés pour s'étendre sensiblement côte à côte, caractérisée par des moyens de connexion d'extrémités (13) sensiblement rigides, destinés à assujettir d'une manière rigide une partie d'extrémité de la paire d'éléments allongés à une autre partie de l'armature flottante, l'un au moins des éléments allongés étant un tuyau renforcé et chaque élément allongé étant flexible, au moins un premier (12a) desdits éléments allongés étant résistant à une compression longitudinale, tandis qu'au moins un second (12b) desdits éléments allongés est résistant à une tension longitudinale, des moyens d'accouplement d'éléments (18) interconnectant lesdits éléments allongés pour qu'ainsi l'application d'une force latérale tendant à modifier la courbure du premier (12a) desdits éléments allongés ait pour effet de soumettre celui-ci à une compression longitudinale et de le faire agir par l'intermédiaire desdits moyens d'accouplement d'éléments pour soumettre le second (12b) desdits éléments allongés à une tension longitudinale, et l'un au moins desdits éléments allongés (12a, 12b) étant adapté pour flotter.

2. Armature flottante selon la revendication 1, caractérisée en ce que lesdits moyens de connexion d'extrémités (13) sensiblement rigides jouent, au moins en partie, le rôle desdits moyens d'accouplement d'éléments interconnectant lesdits éléments allongés.

3. Armature flottante selon la revendication 1 ou la revendication 2, caractérisée en ce que les éléments allongés sont interconnectés par les moyens d'accouplement d'éléments (18) au niveau d'une ou de plusieurs positions intermédiaires entre leurs zones d'extrémité.

4. Armature flottante selon la revendication 3, caractérisée en ce que l'interconnexion des éléments allongés sert à maintenir les deux éléments allongés (12a, 12b) dans une relation côte à côte prescrite.

5. Armature flottante selon l'une quelconque des revendications précédentes, caractérisée en ce que l'interconnexion (13) des éléments allongés sert à transmettre des forces longitudinales entre les éléments allongés.

6. Armature flottante selon l'une quelconque des revendications précédentes, caractérisée en ce que chaque élément allongé (12a, 12b) de ladite paire est résistant aussi bien à une tension longitudinale qu'à une compression longitudinale.

7. Armature flottante selon l'une quelconque des revendications précédentes, caractérisée en ce que l'un au moins des éléments allongés (12a, 12b) a une flottabilité inhérente.

8. Armature flottante selon l'une quelconque des revendications précédentes, caractérisée en ce que l'un au moins des éléments allongés (82) comporte, assujettis à lui, des moyens de flottement (83).

9. Armature flottante selon l'une quelconque des revendications précédentes, caractérisée en ce que chacun des deux éléments allongés (12a, 12b) est un tuyau renforcé flexible.

10. Armature flottante selon l'une quelconque des revendications précédentes, caractérisée en ce que le perçage du ou des tuyaux (12a, 12b) est fermé d'une manière étanche à l'encontre de la pénétration d'eau.

11. Armature flottante selon l'une quelconque des revendications précédentes, caractérisée en ce qu'un matériau porteur est prévu dans la structure de paroi ou dans le perçage du tuyau (12a, 12b).

12. Armature flottante selon l'une quelconque des revendications précédentes, caractérisée en ce que ledit tuyau a une rigidité en torsion au moins égale à 100 000 Newton mètres/radian/mètre de longueur.

13. Armature flottante selon l'une quelconque des revendications précédentes, caractérisée en ce que la paire (11) d'éléments allongés comprend une paire de tuvaux dont l'ensemble a une rigidité en torsion au moins égale à 125 000 Newton mètres/radian/mètre de longueur.

14. Armature flottante selon l'une quelconque des revendications précédentes, caractérisée en ce que lesdits deux éléments allongés (72, 73) sont de longueurs inégales.

15. Armature flottante selon l'une quelconque des revendications précédentes, caractérisée en ce qu'il est prévu deux paires (11) d'éléments allongés, et en ce que les extrémités en vis-à-vis des éléments allongés respectifs sont interconnectées par lesdits moyens de connexion d'extrémités (13) rigides, conformés pour s'adapter à une différence d'écartement entre les paires d'extrémités en vis-à-vis et pour servir de moyens d'accouplement afin d'interconnecter les éléments allongés.

16. Armature flottante selon l'une quelconque des revendications précédentes, caractérisée en ce qu'il est prévu des moyens d'espacement (18, 32, 75) pour maintenir un espacement entre les éléments allongés.

17. Armature flottante selon l'une quelconque des revendications précédentes, caractérisée en ce qu'au moins un élément allongé (12a, 12b, 30, 60, 73, 82) est rectiligne lorsqu'il est dans un état dans lequel il n'est pas soumis à des contraintes.

18. Armature flottante selon l'une quelconque des revendications précédentes, caractérisée en ce que l'un (12a) des éléments allongés d'une paire est en tension, tandis que l'autre (12b) est en compression en l'absence de forces appliquées de l'extérieur.

19. Armature flottante selon la revendication 18, caractérisée en ce que l'un au moins desdits éléments allongés (12a, 12b) est contraint à adopter une configuration non rectiligne en l'absence de forces appliquées de l'extérieur.

20. Armature flottante selon l'une quelconque des revendications précédentes, caractérisée en ce que le perçage du tuyau n'est pas mis sous pression.

21. Installation de pisciculture caractérisée en ce qu'elle comprend la combinaison d'une armature flottante selon l'une quelconque des revendications précédentes, de moyens de support associés à l'armature et d'une enceinte pour poissons supportée par lesdits moyens de support.
